# EUROPÄISCHE PATENTANMELDUNG

(11) **EP 0 905 388 A1**
(43) Veröffentlichungstag der Anmeldung: **31.03.1999**
(21) Anmeldenummer: 98810871.8
(22) Anmeldetag: 02.09.1998
(51) Int. Cl.: F16B 25/00

(54) **Schraubanker**

(30) Priorität: 30.09.1997 DE 19743054
(71) Anmelder: HILTI Aktiengesellschaft, 9494 Schaan (LI)
(72) Erfinder: Kossian, Susanne, 6800 Feldkirch (AT); Keller, Kai-Uwe, 6800 Feldkirch-Tisis (AT); Wanger, Werner, 9493 Mauren (LI); Bömcke, Christian, 6800 Feldkirch (AT); Seyfferth, Wolfgang, 6805 Feldkirch-Gisingen (AT)
(74) Vertreter: Wildi, Roland

(57) **Zusammenfassung**

Ein Schraubanker zum schlagenden Eintreiben und Verankern in einem vorgebohrten Bohrloch weist einen Lastangriffsbereich (2) und einen im wesentlichen zylindrischen Verankerungsbereich (3) auf. An der Mantelfläche (4) des Verankerungsbereichs (3) sind radial abragende, gewindeartig angeordnete Schneiden (5) vorgesehen. Die Schneiden (5) weisen eine asymmetrische Kontur auf. Dabei schliesst die in Eintreibrichtung (S) des Verankerungsbereichs (3) vorlaufende Flanke (6) der Schneiden (5) mit einer Senkrechten zur Achse (A) des Verankerungsbereichs (3) einen Flankenwinkel ein, der kleiner ist als der Flankenwinkel der rückwärtigen Flanke (7) und etwa 20° bis etwa 45° beträgt.

## Beschreibung

Die Erfindung betrifft einen Schraubanker mit Innen- oder Aussengewindeanschluss zum Eintreiben und Verankem in einem vorgebohrten Bohrloch gemäss dem Oberbegriff des Patentanspruchs 1.

Neben den vielfach für Befestigungen in Beton verwendeten Schlag-Spreizdübeln sind auch Schraubanker mit Innen- oder Aussengewindeanschluss bekannt, die mit Hammerschlägen in ein im Untergrund vorbereitetes Bohrloch eingetrieben werden. Die Schraubanker sind im Verankerungsbereich mit gewindeartig angeordneten Schneiden versehen, die sich beim Eintreiben in die Bohrlochwandung eingraben und ein Gewinde erzeugen. Für die Initialisierung des Setzvorgangs müssen die aus dem Stand der Technik bekannten Schraubanker vielfach mit speziellen Werkzeugen gesetzt werden, die beim Eintreiben des Schraubankers eine Drehbewegung erzwingen. Nur so ist gewährleistet, dass über den gesamten Verankerungsbereich in der Bohrlochwandung ein Gewinde erzeugt wird. Die gewindeartigen Schneiden der bekannten Schraubanker sind symmetrisch ausgebildet. Daraus ergibt sich, dass die erzielbaren Auszugswerte nicht grösser sein können als die Kräfte die beim Eintreiben des Schraubankers in das Bohrloch überwunden werden müssen. Beim Eintreiben erfolgt die Gewindefurchung in der Bohrlochwandung meist durch schabende Bearbeitung und/oder durch Verdichtung des Untergrundmaterials an der Bohrlochwandung. Auf diese Weise sind mit den bekannten Schraubankem nur geringe Gewindetiefen erzielbar. Dies erweist sich insbesondere bei Bohrlochtoleranzen als sehr nachteilig. Das Tragverhalten der bekannten Schraubanker ist somit stark von der Bohrlochgenauigkeit abhängig.

Aufgabe der vorliegenden Erfindung ist es daher, einen Schraubanker dahingehend zu verbessem, dass für den Setzvorgang lediglich axiale Schläge, beispielsweise mit einem Hammer, erforderlich sind. Die Furchung des Gewindes in der Bohrlochwandung soll mit möglichst kleinem Energieaufwand erfolgen. Dabei soll eine ausreichend hohe Gewindetiefe erzielbar sein, um Einflüsse der Unrundheit des Bohrloches oder von Bohrlochtoleranzen auf das Tragverhalten und die Tragfähigkeit des Schraubankers möglichst gering zu halten. Durch die Erfindung soll ein Schraubanker geschaffen werden, dem bei verhältnismässig geringen erforderlichen Eintreibenergien möglichst hohe Auszugswerte gegenüberstehen.

Die Lösung dieser teils widersprüchlichen Aufgaben erfolgt erfindungsgemäss durch einen Schraubanker, der die im kennzeichnenden Abschnitt des Patentanspruchs 1 angeführten Merkmale aufweist. Insbesondere wird ein Schraubanker zur schlagenden Verankerung in einem vorgebohrten Bohrloch geschaffen, der einen Lastangriffsbereich und einen zylindrischen Verankerungsbereich aufweist. An der Mantelfläche des Verankerungsbereichs sind radial abragende, gewindeartig angeordnete Schneiden vorgesehen. Die Schneiden weisen eine asymmetrische Kontur auf. Dabei schliesst die in Eintreibrichtung des Verankerungsbereichs vorlaufende Flanke der Schneiden mit einer Senkrechten zur Achse des Verankerungsbereichs einen Flankenwinkel ein, der kleiner ist als der Flankenwinkel der rückwärtigen Flanke und etwa 20° bis etwa 45° beträgt.

Indem die vorlaufende Flanke der gewindeartig verlaufenden Schneiden einen kleineren Flankenwinkel zu einer Senkrechten zur Achse aufweist als die abgewandte rückwärtige Flanke ist die nutzbare Vortriebskraft beim Eintreiben des Schraubdübels möglichst gross und verringert sich der Energieaufwand für das Setzen des Schraubankers. Aus geometrischen Überlegungen erscheint zwar zunächst ein Flankenwinkel für die vorlaufende Flanke von 0° oder nur wenig mehr als 0° als vorteilhafter für die Erhöhung der nutzbaren Vortriebskraft. Jedoch besteht bei einer im wesentlichen senkrecht zur Bohrlochwandung stehenden vorlaufenden Flanke die Gefahr eines Abscherens des Untergrunds. Durch die gewählten Flankenwinkel wird diese Gefahr beseitigt. Auch ist bei diesen Flankenwinkeln gewährleistet, dass die axialen Schläge, beispielsweise eines Hammers, in eine Drehbewegung des Schraubankers gemäss der Steigung der gewindeartig angeordneten Schneiden umgesetzt wird. Dadurch ist die Voraussetzung geschaffen, den Schraubanker, ohne die Zuhilfenahme eines die Drehbewegung initiierenden Setzwerkzeuges, einfach mit einem Hammer zu setzen. Der Flankenwinkel der rückwärtigen Flanke ist grösser. Dadurch erhöht sich bei Zugbelastung des Schraubankers die Spreizwirkung der rückwärtigen Flanke der Schneide und erhöht die Reibkraft, die dem Ausziehen entgegenwirkt. Da der Energieaufwand für das Eintreiben des Schraubankers verringert ist, kann die Schneidengeometrie derart modifiziert werden, dass tiefere Gewindegänge in die Bohrlochwandung eingeschnitten werden.

Besonders vorteilhaft erweist es sich dabei, wenn der Flankenwinkel der vorlaufenden Flanke der Schneiden von etwa 20° bis etwa 45° beträgt.

Der Flankenwinkel der rückwärtigen Flanke der Schneiden wird möglichst gross gewählt und beträgt mit Vorteil bis zu 80°, um die auf die bei Zugbelastung des Schraubankers von der rückwärtigen Flanke auf Bohrlochwandung ausgeübte Spreizkraft und die daraus resultierende Reibkraft möglichst gross zu halten.

Die gewindeartig angeordneten Schneiden weisen eine Steigung auf, die vorzugsweise etwa 45° bis etwa 80° beträgt. Bei diesen Steigungen der gewindeartigen Schneiden sind relativ geringe Eintreibenergien erforderlich. Gleichzeitig ist aber gewährleistet, dass der Schraubanker durch Selbsthemmung im Bohrloch verankert ist.

Der in Eintreibrichtung vordere Gewindeeinlauf der Schneiden schliesst mit der Mantelfläche einen Winkel von bis zu 30° ein, wobei der Winkel zum Vorderende des Verankerungsbereichs geöffnet ist. Dadurch wird beim Eintreiben des Schraubankers das Untergrundmaterial von den Schneiden nicht abgeschabt oder verdrängt, sondern meisselnd bearbeitet.

Indem der radiale Überstand der Schneiden gegenüber der Mantelfläche des Verankerungsbereichs von etwa 1,5 mm bis etwa ¹/₄ des zylindrischen Verankerungsbereichs des Schraubankers beträgt, ist eine ausreichend grosse Eingreiftiefe der Schneiden in die Bohrlochwandung erzielbar. Dadurch ist das Tragverhalten des erfindungsgemäss ausgebildeten Schraubankers gegen Bohrlochunregelmässigkeiten und gegen Bohrlochtoleranzen weniger empfindlich.

Das Vorsehen von mindestens drei gewindeartig verlaufenden Schneiden im Verankerungsbereich stellt einen sehr guten Kompromiss zwischen der erforderlichen Eintreibenergie und der erzielbaren Tragfähigkeit des Schraubankers dar. Aus Symmetriegründen ist es von Vorteil, wenn die drei gewindeartig verlaufenden Schneiden gleichmässig über den Umfang des Verankerungsbereichs verteilt sind.

Der axiale Abstand der gewindeartig angeordneten Schneiden voneinander beträgt mit Vorteil etwa das 3-fache bis 30-fache, vorzugsweise das 5-fache, des radialen Überstands der Schneiden. Durch die erfindungsgemässe Wahl des Abstands ist eine Optimierung der Anzahl Schneiden ermöglicht und wird der Untergrund möglichst gleichmässig belastet. Eine übergrosse Zugbelastung äussert sich nicht in einem plötzlichen Versagensmechanismus. Vielmehr ist die Wahrscheinlichkeit einer Überbeanspruchung der Bohrlochwandung an den rückwärtigen Flanken durch Pressung gleich gering wie die Wahrscheinlichkeit eines Abscherens zwischen den Gewindegängen.

Indem am in Eintreibrichtung vorderen Ende des Verankerungsbereichs ein axial abragender Zentrierbereich angeformt ist, wird das Ansetzen und das zentrierte Eintreiben des Schraubankers in axialer Richtung erleichtert.

In einer Variante des erfindungsgemässen Schraubankers ist der Verankerungsbereich vom Mantel einer Innengewindehülse gebildet. Der erfindungsgemässe Schraubanker übt im unbelasteten Zustand keine Spreizkräfte auf den Untergrund aus. Dadurch ist er auch bei dünneren Untergrundschichten einsetzbar. Bei weniger tragfähigen Materialien besteht die Möglichkeit, den erfindungsgemässen Schraubanker in einer grösseren Tiefe zu setzen. Bei einem schichtweisen Aufbau des Untergrunds kann er bis in die tragfähigste Schicht eingetrieben werden. Der Tiefenausgleich erfolgt über eine mehr oder weniger lange Gewindestange, welche in die in der Tiefe verankerte Innengewindehülse einschraubbar ist.

Bei einer Variante des erfindungsgemässen Schraubankers bildet der Verankerungsbereich den in Eintreibrichtung vorderen Abschnitt einer Ankerstange. In diesem Fall erfolgt der Anschluss eines Bauteils direkt an die mit einem Anschlussgewinde versehene Ankerstange.

Im folgenden wird die Erfindung mit Bezug auf ein in den schematischen Zeichnungen dargestelltes Ausführungsbeispiel und anhand von Zeichnungen zur Verdeutlichung der geometrischen Verhältnisse näher erläutert. Es zeigen:
- Fig. 1: einen erfindungsgemässen Schraubanker im teilweisen Axialschnitt;
- Fig. 2: einen Querschnitt des Schraubankers aus Fig. 1; und
- Fig. 3 und Fig. 4: zwei Zeichnungen zur Erläuterung der geometrischen Verhältnisse der gewindeartigen Schneiden.

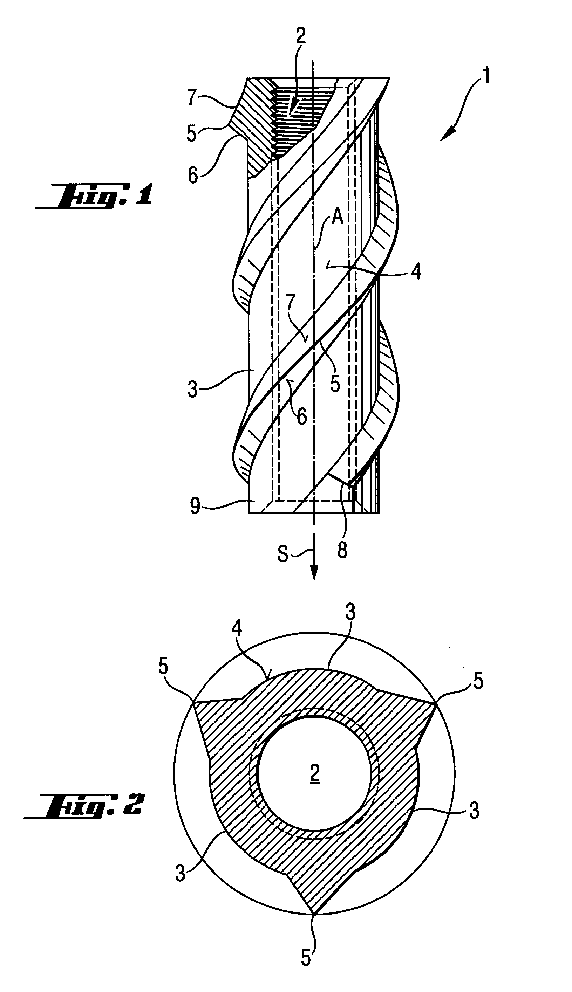

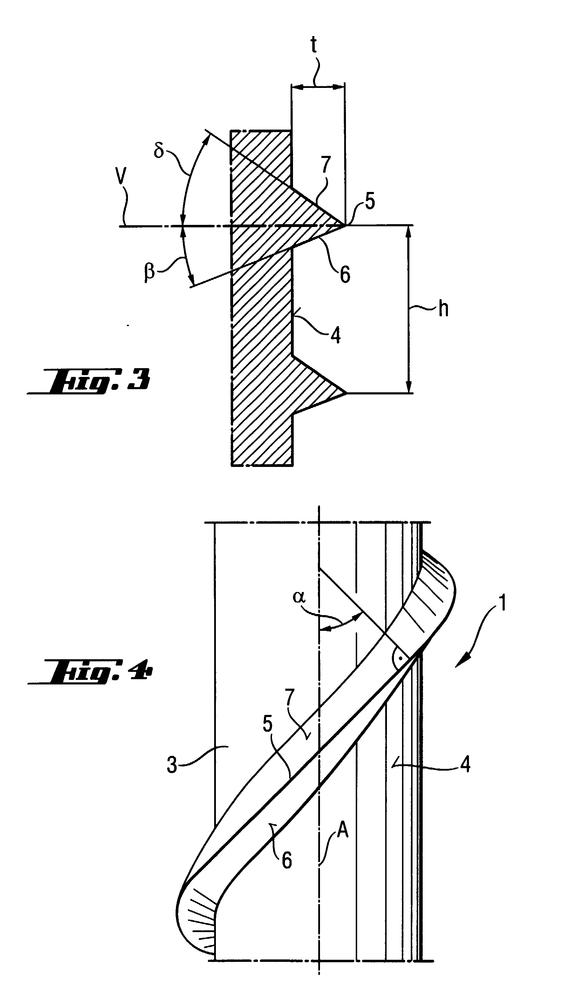

Der erfindungsgemässe Schraubanker wird an Beispiel einer Innengewindehülse erläutert, die in Fig. 1 und 2 gesamthaft mit dem Bezugszeichen 1 versehen ist. Die Achse der Innengewindehülse 1 trägt das Bezugszeichen A. Die mit einer Bohrung versehene Innengewindehülse 1 weist einen Lastangriffsbereich 2 auf, der von einem Innengewinde gebildet ist. Der Verankerungsbereich 3 der Innengewindehülse 1 erstreckt sich über ihre gesamte Länge. Im Verankerungsbereich 3 sind gewindeartig angeordnete Schneiden 5 vorgesehen, die vom Mantel 4 der Innengewindehülse 1 radial abragen. Die Schneiden 5 werden von einer in Bezug auf die Eintreibrichtung S vorlaufenden Flanke 6 und einer rückwärtigen Flanke 7 begrenzt. Gemäss der Schnittdarstellung in Fig. 2 sind drei Schneiden 5 vorgesehen, die sich gewindeartig über die Längserstreckung der Innengewindehülse erstrecken und vorzugsweise gleichmässig über den Umfang verteilt sind. Vom in Bezug auf die Eintreibrichtung S vorderen Ende der Innengewindehülse 1 ragt ein Zentrierbereich 9 axial ab. Der Zentrierbereich 9 dient zum besseren Einführen der Innengewindehülse 1 in ein vorbereitetes Bohrloch. Der Zentrierbereich 9 kann ein zylindrischer Ring sein, der am Vorderende der Innengewindehülse 1 angeformt ist. Vorzugsweise wird er von lappenartigen Fortsätzen gebildet, die vorzugsweise gleichmässig über den Umfang verteilt sind. Der am Vorderende der Innengewindehülse 1 angeordnete Gewindeeinlauf der Schneiden 5 ist mit dem Bezugszeichen 8 versehen. Er ist gegenüber der Mantelfläche 4 unter einem Winkel von bis zu 30° geneigt und zum Vorderende der Innengewindehülse 1 geöffnet.

In den schematischen Darstellungen in Fig. 3 und 4 sind die geometrischen Verhältnisse der Schneiden 5 des erfindungsgemäss ausgebildeten Schraubdübels angegeben. Die Schneiden 5 besitzen gegenüber der Mantelfläche 4 einen radialen Überstand t von etwa 1,5 mm bis etwa ¹/₄ des zylindrischen Verankerungsbereichs 3. Die Steigung der gewindeartigen Schneiden 5 ist mit dem Bezugszeichen a versehen und beträgt etwa 45° bis etwa 80°. Fig. 3 zeigt insbesondere schematisch die asymmetrische Form der Schneiden 5. Dabei schliesst die vorlaufende Flanke 6 mit einer Senkrechten V zur Achse A der Innengewindehülse 1 einen Flankenwinkel β ein, der kleiner ist als der Flankenwinkel δ der rückwärtigen Flanke 7. Insbesondere beträgt der Flankenwinkel β der vorlaufenden Flanke 6 etwa 20° bis etwa 45°. Der Flankenwinkel δ der rückwärtigen Flanke 7 der Schneiden 5 beträgt bis zu 80°. Der axiale Abstand h der gewindeartig verlaufenden Schneiden 5 voneinander beträgt etwa das 3-fache bis 30-fache, vorzugsweise das 5-fache, des radialen Überstands t der Schneiden 5 gegenüber der Mantelfläche 4 der Innengewindehülse 1.

Der erfindungsgemäss ausgebildete Schraubanker ist am Beispiel einer Innengewindehülse erklärt worden, die üblicherweise über ihre gesamte Länge in einem vorgebohrten Bohrloch versenkt wird. Ein Bauteil ist entweder direkt mit einer Schraube am Innengewinde befestigbar oder es wird eine Gewindestange in die Innengewindehülse eingeschraubt, an der sodann das Bauteil angeschlossen wird. Es versteht sich, dass der Schraubanker auch von einer Dübelhülse grösserer Länge gebildet sein kann. In diesem Fall bildet aus wirtschaftlichen Gründen nur der im Untergrund versenkte vordere Abschnitt der Hülse den Verankerungsbereich, der mit den erfindungsgemässen Schneiden versehen ist. In einer alternativen Ausführungsvariante besteht der Schraubanker aus einer Ankerstange, deren mit den Schneiden versehener Vorderabschnitt den im Bohrloch zu verankernden Verankerungsbereich bildet. Der aus dem Bohrloch ragende rückwärtige Abschnitt der Ankerstange ist mit einem Aussengewinde versehen, an das ein Bauteil anschliessbar ist.

## Patentansprüche

1. Schraubanker zum schlagenden Eintreiben und Verankern in einem vorgebohrten Bohrloch mit einem Lastangriffsbereich (2) und einem im wesentlichen zylindrischen Verankerungsbereich (3), der an seiner Mantelfläche (4) mit radial abragenden, gewindeartig angeordneten Schneiden (5) ausgestattet ist, **dadurch gekennzeichnet**, dass die Schneiden (5) eine asymmetrische Kontur aufweisen, wobei die in Eintreibrichtung (S) des Verankerungsbereichs (3) vorlaufende Flanke (6) der Schneiden (5) mit einer Senkrechten (V) zur Achse (A) des Verankerungsbereichs (3) einen Flankenwinkel (β) einschliessen, der kleiner ist als der Flankenwinkel (δ) der rückwärtigen Flanke (7) und etwa 20° bis etwa 45° beträgt.

2. Schraubanker nach Anspruch 1, dadurch gekennzeichnet, dass der Flankenwinkel (6) der rückwärtigen Flanke (7) der Schneiden (5) bis zu 80° beträgt.

3. Schraubanker nach Anspruch 1 oder 2, dadurch gekennzeichnet, dass die gewindeartig angeordneten Schneiden (5) eine Steigung (α) aufweisen, die etwa 45° bis etwa 80° beträgt.

4. Schraubanker nach einem der vorangehenden Ansprüche, dadurch gekennzeichnet, dass der in Eintreibrichtung (S) vordere Gewindeeinlauf (8) der Schneiden (5) mit der Mantelfläche (4) einen Winkel von bis zu 30° einschliesst, wobei der Winkel zum Vorderende des Verankerungsbereichs (3) geöffnet ist.

5. Schraubanker nach einem der vorangehenden Ansprüche, dadurch gekennzeichnet, dass die Schneiden (5) gegenüber der Mantelfläche (4) des Verankerungsbereichs (3) einen radialen Überstand (t) aufweisen, der etwa 1,5 mm bis etwa ¹/₄ des zylindrischen Verankerungsbereichs (3) beträgt.

6. Schraubanker nach einem der vorangehenden Ansprüche, dadurch gekennzeichnet, dass am in Eintreibrichtung (S) vorderen Ende des Verankerungsbereichs (3) ein axial abragender Zentrierbereich (9) angeformt ist.

7. Schraubanker nach einem der vorangehenden Ansprüche, dadurch gekennzeichnet, dass der Verankerungsbereich (3) mindestens drei gewindeartig verlaufende Schneiden (5) aufweist, die vorzugsweise gleichmässig über den Umfang verteilt sind.

8. Schraubanker nach Anspruch 5 und 7, dadurch gekennzeichnet, dass die gewindeartig angeordneten Schneiden voneinander einen axialen Abstand (h) aufweisen, der das etwa 3-fache bis 30-fache, vorzugsweise das 5-fache, des radialen Überstands (t) der Schneiden (5) beträgt.

9. Schraubanker nach einem der vorangehenden Ansprüche, dadurch gekennzeichnet, dass der Verankerungsbereich (3) vom Mantel einer Innengewindehülse gebildet ist.

10. Schraubanker nach einem der Ansprüche 1 bis 8, dadurch gekennzeichnet, dass der Verankerungsbereich (3) den in Eintreibrichtung (S) vorderen Abschnitt einer Ankerstange bildet.
